# EUROPÄISCHE PATENTANMELDUNG

(11) **EP 3 432 516 A1**
(43) Veröffentlichungstag der Anmeldung: **23.01.2019**
(21) Anmeldenummer: 17181997.2
(22) Anmeldetag: 19.07.2017
(51) Int. Cl.: H04L 12/24, H04L 12/751

(54) **NETZWERKWEICHE UND VERFAHREN ZUR AUTOMATISCHEN REKONFIGURATION**

(71) Anmelder: Damovo Deutschland GmbH & Co. KG, 40549 Düsseldorf (DE)
(72) Erfinder: Reich, Markus, 23898 Lüchow (DE)
(74) Vertreter: Stork Bamberger Patentanwälte PartmbB

(57) **Zusammenfassung**

Die vorliegende Erfindung betrifft Verfahren zur automatischen Rekonfiguration einer Netzwerkweiche (10), wobei die Netzwerkweiche (10) jeweils eine Mehrzahl an Ports (11) umfasst, die zum leitungsgebundenen Anschluss von Netzwerkelementen (40) eingerichtet sind. Das Verfahren umfasst das Identifizieren der an den Ports (11) angeschlossenen Netzwerkelemente (40) und Erzeugen von Zuordnungsdaten, die der Zuordnung des jeweiligen Ports (11) zu dem jeweiligen Netzwerkelement (40) entsprechen, das Vergleichen der Zuordnungsdaten mit einer vorbestimmten Zuordnungskonfiguration zwischen den Ports (11) und den Netzwerkelementen (40), und falls das Vergleichen der Zuordnungsdaten mit der vorbestimmten Zuordnungskonfiguration mindestens eine Abweichung hinsichtlich einer Port-Netzwerkelement-Zuordnung ergibt, sowie das Übernehmen der geänderten Zuordnung des jeweiligen Ports (11) zu dem jeweiligen Netzwerkelement (40) in die vorbestimmte Zuordnungskonfiguration und Konfigurieren der Netzwerkweiche (10) auf Basis der vorbestimmten Zuordnungskonfiguration. Des Weiteren betrifft die vorliegende ein Verfahren zum Austausch einer Netzwerkweiche (10), eine Anordnung umfassend eine solche Netzwerkweiche (10) sowie ein Computerprogramm zur Durchführung der Verfahren.

## Beschreibung

Die vorliegende Erfindung betrifft ein Verfahren zur automatischen Rekonfiguration einer Netzwerkweiche. Des Weiteren betrifft die Erfindung ein Verfahren zum Austausch einer Netzwerkweiche. Die vorliegende Erfindung betrifft auch eine Anordnung umfassend eine Netzwerkweiche sowie ein Computerprogramm zur Durchführung der erfindungsgemäßen Verfahren.

Derartige Verfahren, Anordnungen und Computerprogramme kommen zur Konfiguration von Netzwerkweichen zum Einsatz. Insbesondere beim Austausch von Netzwerkweichen ist es erforderlich, die Leitungsverbindung zu den Netzwerkelementen zum Ausbau der Netzwerkweiche zunächst zu lösen, die Netzwerkweiche gegen eine Ersatznetzwerkweiche auszutauschen und anschließend die einzelnen Ports der Netzwerkweiche jeweils mit den Netzwerkelementen wieder zu verbinden. Anschließend ist die Funktion der einzelnen Ports in Abhängigkeit der angeschlossenen Netzwerkelemente neu zu konfigurieren.

Die Konfiguration der Netzwerkweiche erfolgt regelmäßig mittels Konfigurationsservern, wie beispielsweise aus dem Dokument WO 2015/176847 A1 bekannt. So offenbart das vorgenannte Dokument ein Verfahren zum Einbeziehen von Kommunikationsgeräten in ein Netzwerk, wobei während der Konfigurationsphase aus Sicherheitsaspekten mittels eines Konfigurationsservers der Zugriff des jeweils einzubindenden Konfigurationsgeräts - zumindest vorübergehend - eingeschränkt wird.

Nachteilig bei den bekannten Verfahren zur Konfiguration von Netzwerkweichen ist, dass durch die Konfigurationsserver jeweils nur die Portkonfiguration in der Netzwerkweiche eingerichtet wird, die seit der letzten Konfiguration gespeichert bzw. vom Systemadministrator vorgegeben worden ist. Aus diesem Grund ist es stets erforderlich, beim Austausch einer Netzwerkweiche die einzelnen Leitungsverbindungen zwischen den Ports der Netzwerkweiche und den jeweiligen Netzwerkelementen exakt in derselben Anordnung wie zuvor wiederherzustellen. Dies führt dazu, dass ein Austausch von Netzwerkweichen zeit- und kostenintensiv ist und zudem den Einsatz von qualifiziertem Fachpersonal erfordert. In der Praxis sind an eine solche Netzwerkweiche zahlreiche Leitungsverbindungen angeschlossen, die häufig über keinerlei Kennzeichnung verfügen, welchem Port der Netzwerkweiche diese jeweils zugeordnet sind.

Es ist daher Aufgabe der vorliegenden Erfindung, ein Verfahren vorzuschlagen, das eine möglichst einfache Konfiguration einer Netzwerkweiche erlaubt. Des Weiteren ist es Aufgabe der vorliegenden Erfindung, ein Verfahren vorzuschlagen, das den Aufwand des Austauschs einer Netzwerkweiche auf ein Minimum reduziert. Weiter ist es Aufgabe der Erfindung, eine entsprechende Anordnung sowie ein Computerprogramm zur Durchführung der eingangs genannten Verfahren vorzuschlagen.

Die Aufgabe wird durch das eingangs genannte Verfahren dadurch gelöst, dass die Netzwerkweiche jeweils eine Mehrzahl an Ports umfasst, die zum leitungsgebundenen Anschluss von Netzwerkelementen eingerichtet sind und die folgenden Schritte umfassen:
a) Identifizieren der an den Ports angeschlossenen Netzwerkelemente und Erzeugen von Zuordnungsdaten, die der Zuordnung des jeweiligen Ports zu dem jeweiligen Netzwerkelement entsprechen,
b) Vergleichen der Zuordnungsdaten mit einer vorbestimmten Zuordnungskonfiguration zwischen den Ports und den Netzwerkelementen, und, falls das Vergleichen der Zuordnungsdaten mit der vorbestimmten Zuordnungskonfiguration mindestens eine Abweichung hinsichtlich einer Port-Netzwerkelement-Zuordnung ergibt,
c) Übernehmen der geänderten Zuordnung des jeweiligen Ports zu dem jeweiligen Netzwerkelement in die vorbestimmte Zuordnungskonfiguration und Konfigurieren der Netzwerkweiche auf Basis der vorbestimmten Zuordnungskonfiguration.

Das erfindungsgemäße Verfahren bietet den Vorteil, dass die Netzwerkweiche selbsttätig rekonfigurierend eingerichtet und ausgebildet ist. So werden die Netzwerkelemente unabhängig davon, an welchem Port diese vormals angeschlossen waren - auch bei einem Wechsel des Anschlussports - selbstständig erkannt und die Konfiguration der betroffenen Ports automatisch angepasst. So kann bei einem Austausch der Netzwerkweiche das Wiederherstellen der Leitungsverbindung zu dem jeweiligen Netzwerkelement in beliebiger Anordnung erfolgen, da mittels des erfindungsgemäßen Verfahrens die einzelnen Netzwerkelemente an jedem beliebigen Port identifiziert und die jeweiligen Porteigenschaften automatisch rekonfiguriert werden. Hierdurch ist es erstmals möglich, Netzwerkweichen auf besonders einfache Weise ohne tiefergehende Fachkenntnisse austauschen. Zudem bietet das erfindungsgemäße Verfahren den Vorteil, dass Änderungen in der Netzwerktopologie bzw. der Austausch von Netzwerkelementen mittels des erfindungsgemäßen Verfahrens automatisch erkannt werden und eine entsprechende Rekonfiguration in der Netzwerkweiche erfolgt. Andernfalls erforderliche aufwändige und zeitraubende Konfigurationsarbeiten können durch das erfindungsgemäße Verfahren entfallen.

Gemäß einer vorteilhaften Weiterbildung der Erfindung ist vorgesehen, dass Schritt c), nämlich das Übernehmen der geänderten Zuordnung des jeweiligen Ports zu dem jeweiligen Netzwerkelement in die vorbestimmte Zuordnungskonfiguration und Konfigurieren der Netzwerkweiche auf Basis der vorbestimmten Zuordnungskonfiguration, weiter das Anpassen der konfigurierten Porteigenschaften der Netzwerkweiche entsprechend der jeweils geänderten Zuordnung zwischen Port und Netzwerkelement umfasst. Die Rekonfiguration der Netzwerkweiche erfolgt so selbsttätig, sodass grundsätzlich - sofern dies nicht aus anderen Gründen gewünscht ist - kein Eingriff seitens eines Netzwerkadministrators erforderlich ist. Die Porteigenschaften der Netzwerkweiche werden also ebenfalls automatisch im Falle von Änderungen der Leitungsverbindungen zu den Netzwerkelementen angepasst und eine andernfalls notwendige zeitaufwändige manuelle Konfiguration der Netzwerkweiche ist daher nicht mehr erforderlich. Zudem kann der Austausch der Netzwerkweiche bzw. der Austausch von Netzwerkelementen grundsätzlich durch unqualifiziertes Personal erfolgen, da die Wiederherstellung der Leitungsverbindung zwischen den Ports und den jeweiligen Netzwerkelementen in beliebiger Reihenfolge erfolgen kann.

Vorteilhafterweise erfolgt das Identifizieren der Netzwerkelemente auf Basis eindeutiger Kennung des jeweils zugehörigen Netzwerkadapters. Auf diese Weise ist sichergestellt, dass die jeweiligen Netzwerkelemente innerhalb der Netzwerksegmente eindeutig identifiziert und die zugehörigen Porteigenschaften entsprechend konfiguriert werden können. Bevorzugt werden zur Identifizierung der Netzwerkelemente als eindeutige Kennung die MAC-Adressen der zugehörigen Netzwerkadapter verwendet. Es ist jedoch auch möglich, verschiedene weitere Kennungen heranzuziehen, die jedenfalls eine eindeutige Identifizierung des jeweiligen Netzwerkelements und dessen Zuordnung zum jeweiligen Port zumindest innerhalb eines Netzwerksegments erlauben.

Gemäß einer weiteren vorteilhaften Ausbildung der Erfindung ist vorgesehen, dass die vorbestimmte Zuordnungskonfiguration eine Zuordnungsliste umfasst, die jeweils die Kennung eines der Netzwerkelemente dem jeweiligen Port zuordnet. So wird beispielsweise mit der Zuordnungsliste jedem der Netzwerkelemente anhand seiner MAC-Adresse der jeweilige Port der Netzwerkweiche zugeordnet.

Eine zweckmäßige Ausgestaltung der Erfindung sieht vor, dass die vorgenannten Schritte repetierend ausgeführt werden. Dies bietet den Vorteil, dass die an die Netzwerkweiche angeschlossenen Netzwerkelemente hinsichtlich ihrer Portbelegung fortlaufend überprüft werden, sodass im Fall einer Änderung umgehend eine automatische Rekonfiguration der Netzwerkweiche erfolgt.

Eine weitere zweckmäßige Ausbildung der Erfindung zeichnet sich dadurch aus, dass die vorgenannten Schritte mittels einer Steuereinrichtung ausgeführt werden, die mit der Netzwerkweiche über einen der Konfigurationsports verbunden ist. Mittels des Konfigurationsports steht zumindest ein Port zur Verfügung, der statisch vorhanden und ausschließlich für die Kommunikation mit der Steuereinrichtung eingerichtet ist. Der Konfigurationsport stellt also einen Managementport, auch kurz als MGMT bezeichnet dar.

Des Weiteren wird die Aufgabe durch das eingangs genannte Verfahren zum Austausch einer Netzwerkweiche mit einer Mehrzahl an Ports gelöst, wobei das erfindungsgemäße Verfahren die folgenden Schritte umfasst:
Lösen von Leitungsverbindungen zu Netzwerkelementen an den Ports, Austauschen der Netzwerkweiche, Wiederherstellen der Leitungsverbindungen an den Ports in beliebiger Anordnung, Durchführen des Verfahrens zur automatischen Rekonfiguration der Netzwerkweiche wie zuvor beschrieben. Die sich aus dem erfindungsgemäßen Verfahren zum Austausch einer Netzwerkweiche ergebenden Vorteile sind bereits im Zusammenhang mit dem erfindungsgemäßen Verfahren zur automatischen Rekonfiguration einer Netzwerkweiche zuvor beschrieben.

Weiter wird die Aufgabe durch die eingangs genannte Anordnung gelöst, wobei die Anordnung eine Netzwerkweiche umfasst, mehrere Netzwerkelemente, wobei die Netzwerkelemente mit einer Mehrzahl an Ports der Netzwerkweiche verbunden sind, sowie eine Steuereinrichtung, die ausgebildet und eingerichtet ist, die an den Ports angeschlossenen Netzwerkelement zu identifizieren und Zuordnungsdaten, die der Zuordnung des jeweiligen Ports zu dem jeweiligen Netzwerkelement entsprechen zu erzeugen, und wobei die Steuereinrichtung weiter eingerichtet ist, die Zuordnungsdaten mit einer vorbestimmten Zuordnungskonfiguration zwischen den Ports und den Netzwerkelementen zu vergleichen, und, falls das Vergleichen der Zuordnungsdaten mit der vorbestimmten Zuordnungskonfiguration mindestens eine Abweichung hinsichtlich einer Port-Netzwerkelement-Zuordnung ergibt, die geänderte Zuordnung des jeweiligen Ports zu dem jeweiligen Mehrzweckelement in die vorbestimmte Zuordnungskonfiguration zu übernehmen und die Netzwerkweiche auf Basis der vorbestimmten Zuordnungskonfiguration zu konfigurieren.

Gemäß einer vorteilhaften Weiterbildung der Erfindung ist es vorgesehen, dass die Steuereinrichtung ferner eingerichtet ist, die konfigurierten Porteigenschaften der Netzwerkweiche entsprechend der jeweils geänderten Zuordnung zwischen Port und Netzwerkelement anzupassen, falls das Vergleichen der Zuordnungsdaten mit der vorbestimmten Zuordnungskonfiguration mindestens eine Abweichung hinsichtlich einer Port-Netzwerkelement-Zuordnung ergibt.

Vorteilhafterweise ist weiter vorgesehen, dass die Steuereinrichtung ausgebildet ist, die Netzwerkelemente auf Basis eindeutiger Kennung des jeweiligen zugehörigen Netzwerkadapters zu identifizieren.

Gemäß einer weiteren vorteilhaften Ausbildung der Erfindung ist vorgesehen, dass die vorbestimmte Zuordnungskonfiguration eine Zuordnungsliste umfasst, die jeweils die Kennung eines der Netzwerkelemente dem jeweiligen Port zuordnet.

Vorzugsweise ist die Steuereinrichtung mit der Netzwerkweiche über einen der Konfigurationsports verbunden.

Die sich aus der erfindungsgemäßen Anordnung ergebenden Vorzüge sind bereits im Zusammenhang mit dem erfindungsgemäßen Verfahren eingehend erläutert worden. Zur Vermeidung von Wiederholung wird daher in diesem Zusammenhang auf die vorherigen Ausführungen verwiesen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung der erfindungsgemäßen Anordnung
und
- Fig. 2: ein Flussdiagramm zur Veranschaulichung des erfindungsgemäßen Verfahrens zur automatischen Rekonfiguration einer Netzwerkweiche.

Im Folgenden wird das erfindungsgemäße Verfahren zur automatischen Rekonfiguration einer Netzwerkweiche 10, das erfindungsgemäße Verfahren zum Austausch einer Netzwerkweiche 10, die erfindungsgemäße Anordnung mit einer Netzwerkweiche 10 sowie das erfindungsgemäße Computerprogramm näher erläutert.

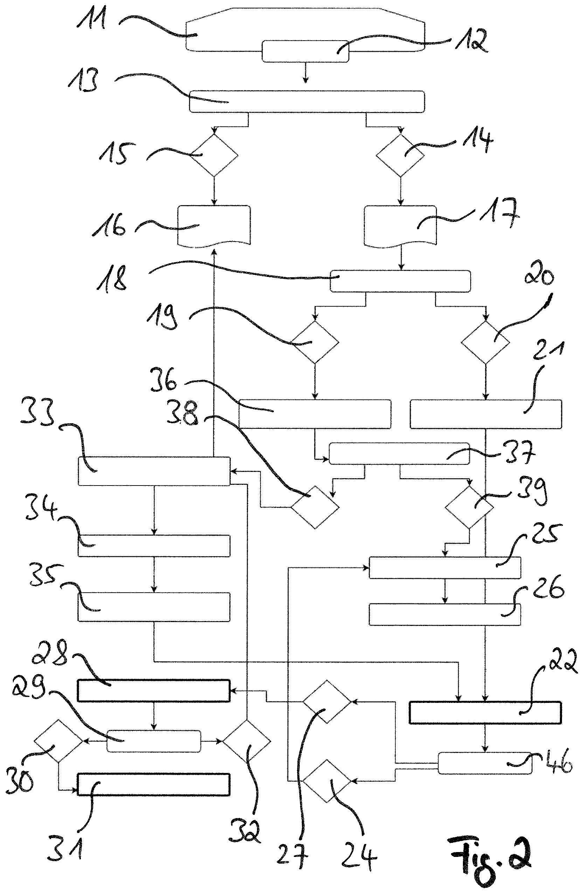

In der Fig. 2 ist anhand eines Flussdiagramms eine bevorzugte Ausführungsform des erfindungsgemäßen Verfahrens zur automatischen Rekonfiguration einer Netzwerkweiche 10 gezeigt. Derartige Netzwerkweichen 10 werden üblicherweise als Switch bezeichnet. Die Netzwerkweiche 10 bildet also ein Kopplungselement, mittels dessen Netzwerksegmente miteinander verbunden werden. Die Kernfunktion der Netzwerkweiche 10 besteht darin, Datenpakete, die auch als Frames bezeichnet werden, innerhalb eines solchen Netzwerksegments an das jeweils vorgesehene Zeil zu leiten.

Die Verteilung der Frames mittels der Netzwerkweiche 10 erfolgt grundsätzlich anhand von Informationen aus dem Delta-Link-Layer des OSI-Modells oder auf Basis zusätzlicher Daten auf der Netzwerkschicht, also Layer 3 oder höher. Die Netzwerkweiche 10 umfasst eine Mehrzahl an Ports 11, die zum leitungsgebundenen Anschluss von Netzwerkelementen 40 eingerichtet sind. Die Netzwerkelemente 40 bezeichnen die Netzwerkgeräte, die innerhalb des jeweiligen Netzwerksegments zusammengeschlossen werden. Der leitungsgebundene Anschluss erfolgt mittels Patch- oder Anschlusskabeln in Kupfer- oder Glasfaserausführung.

Mittels eines Identifizierungsschritts 12 werden die an den Ports 11 angeschlossenen Netzwerkelemente 40 identifiziert und Zuordnungsdaten erzeugt, die der Zuordnung des jeweiligen Ports 11 zu dem jeweiligen Netzwerkelement 40 entsprechen. Die Identifizierung der Netzwerkelemente 40 erfolgt vorzugsweise auf Basis der den jeweiligen Netzwerkelementen 40 zugeordneten MAC-Adressen. Die MAC-Adresse, im Englischen als Media-Access-Control-Address bezeichnet, ist eine Hardware-Adresse des jeweiligen Netzwerkelements 40, anhand derer das jeweilige Netzwerkelement 40 eindeutig identifiziert werden kann.

Zum Identifizieren der angeschlossenen Netzwerkelemente 40 werden diese MAC-Adressen abgefragt und so der aktuelle Anschlusszustand der Netzwerkelemente 40 an die jeweiligen Ports 11 aufgenommen. Hieraus werden die Zuordnungsdaten erzeugt, die eine Zuordnung zwischen den jeweiligen Ports und den daran jeweils angeschlossenen Netzwerkelementen 40 erlauben. In einem Vergleichsschritt 13 werden die so gewonnenen Zuordnungsdaten mit einer vorbestimmten Zuordnungskonfiguration zwischen den Ports 11 und den Netzwerkelementen 40 verglichen. In der vorbestimmten Zuordnungskonfiguration sind Daten hinterlegt, die Rückschluss auf die Soll-Konfiguration zwischen den jeweiligen Ports 11 und den Netzwerkelementen 40 geben. Die vorbestimmte Zuordnungskonfiguration entspricht damit der voreingestellten Grundkonfiguration der Netzwerkweiche 10.

Falls im Vergleichsschritt 13 das Vergleichen der Zuordnungsdaten mit der vorbestimmten Zuordnungskonfiguration zumindest eine Abweichung hinsichtlich einer Port-Netzwerkelement-Zuordnung ergibt, wird in dem in Fig. 2 dargestellten Flussdiagramm im Folgenden der Abweichungspfad 14 beschritten. Liegt keine Abweichung vor, wird über den Gleichheitspfad 15 in den Ruhezustand 16 gewechselt. Auf diese Weise wird eine Veränderung der an die Netzwerkweiche 10 angeschlossenen Netzwerkelemente 40, beispielsweise durch Änderung der Portbelegungen, erkannt und - sofern erforderlich - die Netzwerkwerkweiche 10 automatisch rekonfiguriert.

Vorteilhafterweise umfasst der Schritt c) das Übernehmen der geänderten Zuordnung des jeweiligen Ports 11 zu dem jeweiligen Netzwerkelement 40 weiter das Anpassen der konfigurierten Porteigenschaften der Netzwerkweiche 10 entsprechend der jeweils geänderten Zuordnung zwischen Port 11 und Netzwerkelement 40. Der Ablauf des Anpassens der konfigurierten Porteigenschaften der Netzwerkweiche 10 wird im Folgenden anhand der Fig. 2 beispielhaft erläutert.

Zunächst wird im Schritt 17 die jeweilige Zuordnungskonfiguration desjenigen Ports 11 abgefragt, bei dem der Vergleich der Zuordnungsdaten mit der vorbestimmten Zuordnungskonfiguration ergeben hat, dass sich eine Änderung hinsichtlich des an diesem Port 11 angeschlossenen Netzwerkelements 40 ergeben hat. Mit anderen Worten wird im Schritt 17 der Port 11 bzw. diejenigen Ports 11 identifiziert, an denen eine Änderung festgestellt wurde. Anschließend wird im Schritt 18 überprüft, ob es sich bei dem identifizierten Port 11 um einen Trunk-Port eines Virtual Local Area Network, auch als VLAN bezeichnet, handelt. Gehört der betreffende Port 11 zu einem solchen logischen Teilnetz, erfolgt die weitere Anpassung der konfigurierten Porteigenschaften der Netzwerkweiche 10 entlang des Pfades 19, andernfalls entlang des Pfades 20.

Ist im Schritt 18 erkannt worden, dass es sich nicht um einen Trunk-Port handelt, so wird dem Pfad 20 folgend im Schritt 21 die jeweilige Porteigenschaft angepasst. Auf Basis der geänderten Zuordnung des jeweiligen Ports 11 zu dem jeweiligen Netzwerkelement 40 gemäß der vorbestimmten Zuordnungskonfiguration werden die Eigenschaften des vormals dem Netzwerkelement 40 zugeordneten Ports 11 im Schritt 22 nun an den nun neu zugeordneten Port 11 durch Konfiguration der Netzwerkweiche 10 übertragen. Im Anschluss werden die Zuordnungsdaten entsprechend der neuen Zuordnung im Schritt 22 geändert.

Optional erfolgt im Schritt 46 eine Überprüfung, ob die Zuordnungsdaten ordnungsgemäß geändert worden sind. Falls der Ergebniszustand 24 eintritt, also die Überprüfung eine nicht ordnungsgemäße Änderung ergibt, erfolgt eine Ausnahmebehandlung gemäß der nachfolgenden beschriebenen Schritte 25, 26. Andernfalls erfolgt über den Ergebniszustand 27 die Ausführung einer PNP-Projekt-Suche im Schritt 28, die weiter unten beschrieben wird.

Wurde ein konfigurierter Trunk-Port im Schritt 19 erkannt, wird zunächst im Schritt 36 mögliche Abhängigkeiten geprüft. Anhand dieser Prüfung erfolgt im Schritt 37 die Bestimmung, ob eine Rekonfiguration aufgrund vorhandener Abhängigkeit überhaupt möglich ist. Sofern dies nicht möglich ist, wird über den Ergebniszustand 39 eine Fehlermeldung, beispielsweise in Form einer Ausnahmebehandlung, im Englischen als "exception" bezeichnet, erzeugt und optional im Schritt 26 der Netzwerk- bzw. Systemadministrator benachrichtigt.

Ist eine Rekonfiguration gemäß Ergebniszustand 38 möglich, wird im Schritt 39 die gesamte Konfiguration der Trunk-Ports abgefragt, im Schritt 38 die vormaligen Kanäle bzw. Trunk-Ports heruntergefahren. Im Schritt 35 wird die entsprechende Portkonfiguration in der Netzwerkweiche 10 wiederhergestellt und das Verfahren im Schritt 22 fortgesetzt.

Vorteilhafterweise erfolgt das Identifizieren der Netzwerkelemente 40 auf Basis eindeutiger Kennung des jeweils zugehörigen Netzwerkadapters. Wie bereits eingangs beschrieben, basiert das Identifizieren vorzugsweise auf der Verwendung der MAC-Adresse des jeweils zugehörigen Netzwerkadapters. Alternativ ist es möglich, weitere Kennung zur Identifikation zu nutzen, die dem jeweiligen Netzwerkelement 40 oder dessen zugehörigem Netzwerkadapter zugeordnet sind und diesen eindeutig identifizieren.

Weiter bevorzugt umfasst die vorbestimmte Zuordnungskonfiguration eine Zuordnungsliste, die jeweils die Kennung eines der Netzwerkelemente 40 demjenigen Port 11 zuordnet. Auf diese Weise werden beispielsweise die MAC-Adressen der Netzwerkelemente 40 den jeweiligen Ports 11 zugeordnet.

Vorzugsweise werden die vorgenannten Schritte repetierend ausgeführt. Ausgehend vom Ruhezustand 16 werden die erfindungsgemäßen Verfahrensschritte zeitlich wiederkehrend beginnend mit dem Identifizierungsschritt 12 ausgeführt, um etwaige Änderungen der Netzwerktopologie zeitnah erkennen zu können und im Falle einer erkannten Änderung die automatische Rekonfiguration der Netzwerkweiche 10 unmittelbar auszuführen.

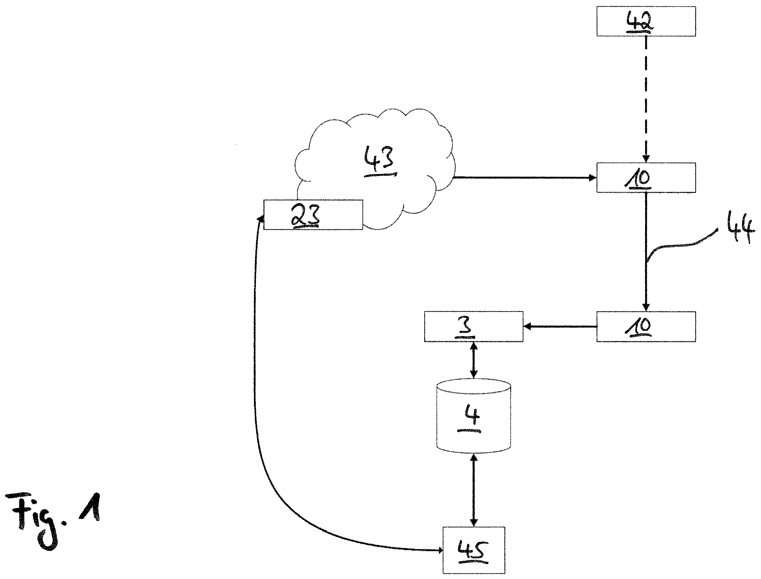

Weiter bevorzugt werden die vorgenannten Schritte des erfindungsgemäßen Verfahrens mittels der in Fig. 1 gezeigten Steuereinrichtung ausgeführt. Die Steuereinrichtung 23 ist über einen Konfigurationsport mit der Netzwerkweiche 10 verbunden. Die Steuereinrichtung 23 ist beispielsweise als Konfigurationsserver an einen Managementport der Netzwerkweiche 10 angeschlossen.

Anhand der Fig. 1 wird im Folgenden das erfindungsgemäße Verfahren zum Austausch einer Netzwerkweiche 10 im Detail erläutert. Die auszutauschende Netzwerkweiche 42 wird zunächst durch Lösen der Leitungsverbindungen 41 zu den Netzwerkelementen 40 von den Ports 11 gelöst - in Figur 1 nicht gezeigt.

Anschließend wird die erfindungsgemäße Steuereinrichtung 23 über den Konfigurationsport mit dem als Ersatz für die Netzwerkweiche 42 bereitgestellten Netzwerkweiche 10 verbunden. Auf Basis eines in der Steuereinrichtung 23 hinterlegten PNP-Projektes 43, also eines "Plug and Play"-Projektes, das eine automatische Vorkonfiguration der Netzwerkweiche 10 gewährleistet, findet eine Vorkonfiguration des ausgetauschten Netzwerkweiche 10 statt.

Anschließend wird die Netzwerkweiche 10, wie durch den Pfeil 44 in Figur 1 angedeutet, wieder in das Gesamtsystem integriert und die Leitungsverbindungen 41 an den Ports 11 der Netzwerkweiche 10 in beliebiger Anordnung wiederhergestellt - nicht in Figur 1 gezeigt.

Nachdem die Leitungsverbindungen 41 an den Ports 11 wieder hergestellt worden sind, wird die Netzwerkweiche 10 mittels des erfindungsgemäßen Verfahrens automatisch rekonfiguriert. Hierzu werden im Wesentlichen der zuvor bereits erläuterte Identifizierungsschritt 3, der Vergleichsschritt 4, sowie eine Portkonfiguration 45, die die bereits im Zusammenhang mit der Figur 2 ausführlich beschriebenen Schritte umfasst, ausgeführt.

Die Funktion der erfindungsgemäßen Anordnung ergibt sich bereits aus obigen Ausführungen zum erfindungsgemäßen Verfahren. Zur Vermeidung von Wiederholungen wird daher im Zusammenhang mit dem erfindungsgemäßen Verfahren auf obige Ausführungen auch hinsichtlich der erfindungsgemäßen Anordnung verwiesen und im Folgenden nur ergänzend die erfindungsgemäße Anordnung erläutert.

Die erfindungsgemäße Anordnung umfassend eine Netzwerkweiche 10 sowie mehrere der Netzwerkelemente 40. Die Netzwerkelemente 40 sind mit einer Mehrzahl der Ports 11 der Netzwerkweiche 10 verbunden. Die Steuereinrichtung 23 ist ausgebildet und eingerichtet, die an den Ports 11 angeschlossenen Netzwerkelemente 40 zu identifizieren und Zuordnungsdaten, die der Zuordnung des jeweiligen Ports 11 zu dem jeweiligen Netzwerkelement 40 entsprechen, zu erzeugen.

Weiter ist die Steuereinrichtung 23 eingerichtet, die Zuordnungsdaten mit einer vorbestimmten Zuordnungskonfiguration zwischen den Ports 11 und den Netzwerkelementen 40 zu vergleichen, und falls das Vergleichen der Zuordnungsdaten mit der vorbestimmten Zuordnungskonfiguration mindestens eine Abweichung hinsichtlich einer Port-Netzwerkelement-Zuordnung ergibt, die geänderte Zuordnung des jeweiligen Ports zu dem jeweiligen Netzwerkelement in die vorbestimmte Zuordnungskonfiguration zu übernehmen und die Netzwerkweiche 10 auf Basis der vorbestimmten Zuordnungskonfiguration zu konfigurieren.

Vorteilhafter Weise ist die Steuereinrichtung 23 ferner eingerichtet, die konfigurierten Porteigenschaften der Netzwerkweiche 10 entsprechend der jeweils geänderten Zuordnung zwischen Port 11 und Netzwerkelement 40 anzupassen, falls das Vergleichen der Zuordnungsdaten mit der vorbestimmten Zuordnungskonfiguration mindestens eine Abweichung hinsichtlich einer Port-Netzwerkelement-Zuordnung ergibt.

Bevorzugt ist die Steuereinrichtung 23 ausgebildet, die Netzwerkelemente 40 auf Basis eindeutiger Kennungen des jeweils zugehörigen Netzwerkadapters zu identifizieren. Beispielsweise auf Basis deren MAC-Adresse. Die vorbestimmte Zuordnungskonfiguration umfasst hierzu vorzugsweise eine Zuordnungsliste, die jeweils die Kennung eines der Netzwerkelemente 40 dem jeweiligen Port 11 zuordnet.

Vorteilhafter Weise ist die Steuereinrichtung 23 mit der Netzwerkweiche 10 über einen der Konfigurations-Ports verbunden ist.

Die Erfindung umfasst weiter ein Computerprogramm, das eingerichtet ist, die Netzwerkweiche 10 anzuweisen, die vorgenannten Verfahren auszuführen. Vorzugsweise ist das Computerprogramm als Skriptsprache, beispielsweise in den Hochsprachen Python, BASH oder TCL ausgebildet. Das Computerprogramm ist weiter eingerichtet, die Funktion der Steuereinrichtung 23 zu steuern, die beispielsweise als Konfigurationsserver ausgebildet ist.

## Patentansprüche

1. Verfahren zur automatischen Rekonfiguration einer Netzwerkweiche (10), wobei die Netzwerkweiche (10) jeweils eine Mehrzahl an Ports (11) umfasst, die zum leitungsgebundenen Anschluss von Netzwerkelementen (40) eingerichtet sind, umfassend die Schritte:
a) Identifizieren der an den Ports (11) angeschlossenen Netzwerkelemente (40) und Erzeugen von Zuordnungsdaten, die der Zuordnung des jeweiligen Ports (11) zu dem jeweiligen Netzwerkelement (40) entsprechen,
b) Vergleichen der Zuordnungsdaten mit einer vorbestimmten Zuordnungskonfiguration zwischen den Ports (11) und den Netzwerkelementen (40), und
falls das Vergleichen der Zuordnungsdaten mit der vorbestimmten Zuordnungskonfiguration mindestens eine Abweichung hinsichtlich einer Port-Netzwerkelement-Zuordnung ergibt,
c) Übernehmen der geänderten Zuordnung des jeweiligen Ports (11) zu dem jeweiligen Netzwerkelement (40) in die vorbestimmte Zuordnungskonfiguration und Konfigurieren der Netzwerkweiche (10) auf Basis der vorbestimmten Zuordnungskonfiguration.

2. Verfahren nach Anspruch 1, **dadurch gekennzeichnet, dass** Schritt c) weiter das Anpassen der konfigurierten Porteigenschaften der Netzwerkweiche (10) entsprechend der jeweils geänderten Zuordnung zwischen Port (11) und Netzwerkelement (40) umfasst.

3. Verfahren nach einem der Ansprüche 1 oder 2, **dadurch gekennzeichnet, dass** das Identifizieren der Netzwerkelemente (40) auf Basis eindeutiger Kennungen des jeweils zugehörigen Netzwerkadapters erfolgt.

4. Verfahren nach Anspruch 3, **dadurch gekennzeichnet, dass** die vorbestimmte Zuordnungskonfiguration eine Zuordnungsliste umfasst, die jeweils die Kennung eines der Netzwerkelemente (40) dem jeweiligen Port (11) zuordnet.

5. Verfahren nach einem der Ansprüche 1 bis 4, **dadurch gekennzeichnet, dass** die vorgenannten Schritte repetierend ausgeführt werden.

6. Verfahren nach einem der Ansprüche 1 bis 5, **dadurch gekennzeichnet, dass** die vorgenannten Schritte mittels einer Steuereinrichtung (23) ausgeführt werden, die mit der Netzwerkweiche (10) über einen der Konfigurations-Ports verbunden ist.

7. Verfahren zum Austausch einer Netzwerkweiche (10) mit einer Mehrzahl an Ports (11), umfassend die Schritte:
- Lösen von Leitungsverbindungen (41) zu Netzwerkelementen (40) an den Ports (11),
- Austauschen der Netzwerkweiche (42, 10),
- Wiederherstellen der Leitungsverbindungen (41) an den Ports (11) in beliebiger Anordnung,
- Durchführen des Verfahrens zur automatischen Rekonfiguration der Netzwerkweiche (10) nach einem der Ansprüche 1 bis 6.

8. Anordnung umfassend eine Netzwerkweiche (10), mehrere Netzwerkelemente (40), wobei die Netzwerkelemente (40) mit einer Mehrzahl an Ports (11) der Netzwerkweiche (40) verbunden sind, sowie eine Steuereinrichtung (23), die ausgebildet und eingerichtet ist, die an den Ports (11) angeschlossenen Netzwerkelemente (40) zu identifizieren und Zuordnungsdaten, die der Zuordnung des jeweiligen Ports (11) zu dem jeweiligen Netzwerkelement (40) entsprechen, zu erzeugen, und wobei die Steuereinrichtung (23) weiter eingerichtet ist, die Zuordnungsdaten mit einer vorbestimmten Zuordnungskonfiguration zwischen den Ports (11) und den Netzwerkelementen (40) zu vergleichen, und falls das Vergleichen der Zuordnungsdaten mit der vorbestimmten Zuordnungskonfiguration mindestens eine Abweichung hinsichtlich einer Port-Netzwerkelement-Zuordnung ergibt, die geänderte Zuordnung des jeweiligen Ports (11) zu dem jeweiligen Netzwerkelement (40) in die vorbestimmte Zuordnungskonfiguration zu übernehmen und die Netzwerkweiche (10) auf Basis der vorbestimmten Zuordnungskonfiguration zu konfigurieren.

9. Anordnung nach Anspruch 8, **dadurch gekennzeichnet, dass** die Steuereinrichtung (23) ferner eingerichtet ist, die konfigurierten Porteigenschaften der Netzwerkweiche (10) entsprechend der jeweils geänderten Zuordnung zwischen Port (11) und Netzwerkelement (40) anzupassen, falls das Vergleichen der Zuordnungsdaten mit der vorbestimmten Zuordnungskonfiguration mindestens eine Abweichung hinsichtlich einer Port-Netzwerkelement-Zuordnung ergibt.

10. Anordnung nach einem der Ansprüche 8 oder 9, **dadurch gekennzeichnet, dass** die Steuereinrichtung (23) ausgebildet ist, die Netzwerkelemente (40) auf Basis eindeutiger Kennungen des jeweils zugehörigen Netzwerkadapters zu identifizieren.

11. Anordnung nach Anspruch 10, **dadurch gekennzeichnet, dass** die vorbestimmte Zuordnungskonfiguration eine Zuordnungsliste umfasst, die jeweils die Kennung eines der Netzwerkelemente (40) dem jeweiligen Port (11) zuordnet.

12. Anordnung nach einem der Ansprüche 8 bis 11, **dadurch gekennzeichnet, dass** die Steuereinrichtung (23) mit der Netzwerkweiche (10) über einen der Konfigurations-Ports verbunden ist.

13. Computerprogramm, **dadurch gekennzeichnet, dass** dieses eingerichtet ist, eine Netzwerkweiche (10) anzuweisen, ein Verfahren nach einem der Ansprüche 1 bis 7 auszuführen.
